(19) Europäisches Patentamt
European Patent Office
Office européen des brevets

(11) **EP 2 101 462 A2**

(12) **EUROPEAN PATENT APPLICATION**

(43) Date of publication:
**16.09.2009 Bulletin 2009/38**

(51) Int Cl.:
**H04L 27/26** (2006.01)

(21) Application number: **09155160.6**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.03.2008 JP 2008065174**

(71) Applicant: **Fujitsu Limited**
**Kawasaki-shi, Kanagawa 211-8588 (JP)**

(72) Inventor: **Hamano, Mitsuharu**
**Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **Peak suppressing apparatus, wireless transmitting apparatus, and window function generating apparatus**

(57)     A peak suppressing apparatus for suppressing peak components of a signal using a window function includes a detecting unit that detects the peak components which are more than a given threshold value, a window width setting unit that sets a window width of the window function, and a window function generating unit that generates the window function using quadratic functions by calculation on the basis of the peak levels of the peak components and the window width.

## FIG. 2

**Description**

FIELD

The present invention relates to a peak suppressing apparatus that suppresses peak components of a signal using a window function. The peak suppressing apparatus includes a technique related to a peak suppressing process performed in a wireless transmitting apparatus using a multi-carrier transmission system, such as an OFDM (orthogonal frequency divisional multiplexing) system or an OFDMA (orthogonal frequency divisional multiple access) system.

BACKGROUND

The multi-carrier transmission system divides data into a plurality of sub-carriers and transmits the divided sub-carriers in parallel. The multi-carrier transmission system may increase a symbol period, as compared to a single carrier transmission system, and reduce transmission deterioration using multiple paths. In addition, the OFDM system capable of effectively implementing the multi-carrier transmission transmits signals using a plurality of orthogonal sub-carriers. Therefore, the OFDM system may improve frequency use efficiency and achieve high-speed transmission.

The multi-carrier transmission system (such as the OFDM system) has been put into practical use in, for example, a terrestrial digital television or a wireless LAN, and has been applied to WiMAX (worldwide interoperability for microwave access), which is one of the communication standards, such as a mobile communication standard for mobile phones and a wireless data communication standard. The WiMAX (including mobile WiMAX) is standardized by IEEE802.16-2004/IEEE802.16e. In the following, an example of a wireless transmitting apparatus using the OFDM system as a transmission system is described.

The wireless transmitting apparatus performs inverse fast Fourier transform (IFFT) on sub-carrier signals that are orthogonal to each other to multiplex the frequency of each of the sub-carrier signals, thereby generating an OFDM modulation signal, and transmits the generated signal. The OFDM modulation signal generated by the IFFT process includes peak components. And, in the OFDM modulation signal, a PAPR (peak-to-average power ratio) tends to be increased, that is, peak transmission power tends to be considerably higher than average transmission power. When a signal with a high PAPR is transmitted, a transmission power amplifier (hereinafter, simply referred to as an 'amplifier') provided in the wireless transmitting apparatus is preferable to have high linearity over a wide dynamic range, in order to prevent the non-linear distortion of a transmission signal during signal amplification or power leakage to adjacent channels.

However, in general, the linearity and the efficiency of the amplifier are contrary to each other. Therefore, when high linearity is ensured over a wide dynamic range, power efficiency is lowered, and the power consumed by the wireless transmitting apparatus is increased. For this reason, a peak suppressing process of suppressing peak transmission power is performed in order to reduce the PAPR.

Further, when a peak component is suppressed, modulation accuracy is lowered. Therefore, a peak suppression method of minimizing the deterioration of the modulation accuracy using a window function has been known. The peak suppression method using a window function multiplies a peak point that is more than the threshold value of a suppression level by a correction coefficient (= a suppression level/the peak value of envelope of an input signal) to reduce the level of the peak point to the suppression level. In this case, the peak suppression method uses a window function as the correction coefficient in order to prevent the peak points from being discontinuous. The height (the level of the highest portion) of the window function is equal to (a suppression level/the peak value of the envelope of an input signal), and the magnitude of a start point is equal to that of an end point. The level of the peak point may be reduced to the suppression level (threshold value) while smoothly changing adjacent (front or rear of) peak points by multiplying the highest portion of the window function by the peak point of an input signal while synchronizing them.

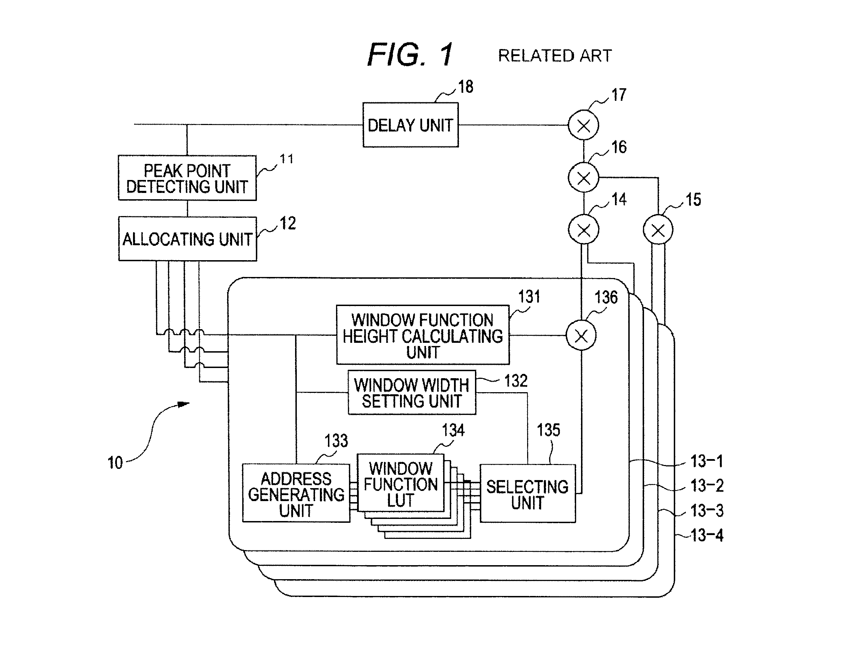

FIG. 1 illustrates an example of the structure of a window-function-type peak suppressing unit of a wireless transmitting apparatus according to the related art. A window-function-type peak suppressing unit 10 illustrated in FIG. 1 includes, for example, four window function generating units 13-1 to 13-4 (generically referred to as a window function generating unit 13) in order to process a maximum of four peak points detected within the time of the window width of a window function. When a peak point detecting unit 11 detects a peak point having a peak level that is more than a threshold value from a transmission signal subjected to IFFT, an allocating unit 12 allocates the peak point to one of the window function generating units 13 that performs no process.

A table (LUT) 134 of the window function generating unit 13 stores plural kinds of window functions having different window widths. Since a window width for effectively suppressing peak components depends on the frequency band width and the sampling rate of IFFT, the window width of the window function is changed depending on the frequency band width and the sampling rate of IFFT. Therefore, plural kinds of window functions having different window widths are prepared for the peak suppressing process. In particular, in a WiMAX communication system (WiMAX system), in order to correspond to various frequency band widths and sampling rates of various countries, the operation results of the window functions with window widths corresponding to various conditions are set in the wireless transmitting apparatus as a window function table in advance, and one of the window functions satisfying the current conditions is selected and used.

An address generating unit 133 generates read addresses for reading all the window functions of the tables, and outputs the window function stored in the table 134 to a selecting unit 135.

A window width is set in a window width determining (setting) unit 132 in advance. The selecting unit 135 selects a window function corresponding to the window width set in the window width setting unit 132 and outputs the selected window function.

A window function height calculating unit 131 calculates a suppression amount (window function height) to reduce the peak level of a peak point to a suppression level. A multiplier 136 multiplies the selected window function by the calculated suppression amount. A multiplier 14 multiplies the output of the multiplier 136 of the window function generating unit 13-1 by the output of the multiplier 136 of the window function generating unit 13-2 to compose the window functions. A multiplier 15 multiplies the output of the multiplier 136 of the window function generating unit 13-3 by the output of the multiplier 136 of the window function generating unit 13-4 to compose the window functions. A multiplier 16 multiplies the output of the multiplier 14 by the output of the multiplier 15 to compose all the window functions generated by the window function generating units 13-1 to 13-4. In this way, a window function for suppressing all peak points maximum of four, within the time of the window width is generated and then output to a multiplier 17. The output of the multiplier 136 of the window function generating unit 13 allocated with no process is 1.

The multiplier 17 multiplies the transmission signal that is delayed by a predetermined amount of time by a delay unit 18 by the composed window function output from the multiplier 16. In this way, the peak point of the transmission signal is suppressed.

For example, a technique related to the window-function-type peak suppressing process is proposed wherein the process of interpolating spectral peaks of data clipped by a Hanning window function using a quadratic function or a Gauss function (see Japanese Laid-open Patent Publication No. 6-295855). In addition, a technique related to the window-function-type peak suppressing process is proposed wherein the process of inserting a zero series into an A/D-converted data series so as to be approximate to a polynomial including a quadratic function, performing discrete Fourier transform to obtain amplitude values, and using three values near the maximum value among the amplitude values to calculate simultaneous polynomials of the quadratic function, thereby approximating the frequency of a beat signal (see Japanese Laid-open Patent Publication No. 2005-337825).

As described above, plural kinds of window functions having different window widths corresponding to the frequency bandwidth and the sampling rate of IFFT are set in the wireless transmitting apparatus in advance. However, this structure may not be applied to a wireless communication system (such as a WiMAX system) that does not have a predetermined frequency bandwidth or sampling rate. In addition, it is difficult to cope with a case in which the window width is changed to values other than the set values.

Therefore, the related art using a table having predetermined plural kinds of window functions stored therein has a problem in that it is difficult to flexibly correspond to various frequency band widths or sampling rates.

SUMMARY

Accordingly, it is desirable in one aspect of embodiment discussed herein to provide a peak suppressing apparatus and a wireless transmitting apparatus which may freely generate a window function with various window widths corresponding to a frequency band or a sampling rate and perform a peak suppressing process, and a window function generating device and a window function generating method which may freely generate a window function corresponding to a window width.

According to an aspect of the embodiment, a peak suppressing apparatus for suppressing peak components of a signal using a window function includes a detecting unit that detects the peak components which are more than a given threshold value, a window width setting unit that sets a window width of the window function, and a window function generating unit that generates the window function using quadratic functions by calculation on the basis of the peak levels of the peak components and the window width.

It is to be understood that both the foregoing general description and the following detailed description are exemplary and explanatory and are not restrictive of the embodiment, as claimed.

BRIEF DESCRIPTION OF THE DRAWINGS

Preferred features of the present invention will now be described, purely by way of example, with reference to the accompanying drawings, in which:-

FIG. 1 illustrates an example of the structure of a window-function-type peak suppressing unit of a wireless transmitting apparatus according to the related art;

FIG. 2 illustrates an example of the structure of a wireless transmitting apparatus according to the embodiment;

FIG. 3 illustrates an example of the structure of a window-function-type peak suppressing unit 40;

FIG. 4 illustrates a window function generated by a quadratic curve window function generating unit 44;

FIG. 5 illustrates the frequency characteristics of a quadratic curve window function;

FIGS. 6A to 6D illustrate a method of generating a quadratic curve window function;

FIG. 7 illustrates an example of the structure of the quadratic curve window function generating unit 44 that generates a quadratic curve window function; and

FIGS. 8A to 8D illustrate a quadratic curve window function when two peak points are detected within the time of a window width.

## DESCRIPTION OF EMBODIMENT

Hereinafter, an example of a wireless transmitting apparatus of an embodiment is described with reference to the drawings.

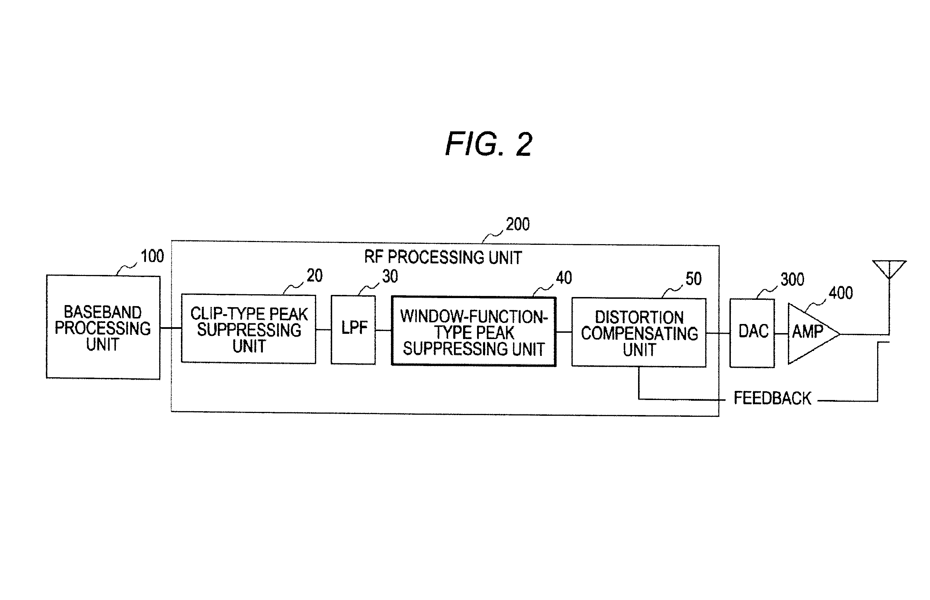

FIG. 2 illustrates an example of the structure of a wireless transmitting apparatus according to the embodiment. A transmission signal generated by a baseband processing unit 100 is input to an RF processing unit 200. A clip-type peak suppressing unit 20 performs a clip-type peak suppressing process that uniformly clips components that are more than a threshold value among the peak components included in the transmission signal. When the clip-type peak suppressing process is performed, radiation occurs beyond a frequency band. Therefore, a low-pass filter (LPF) 30 performs a band limiting process. When the band limiting process is performed, the amplitude of the clipped peak is increased to be more than the threshold value. Therefore, a window function-type peak suppressing unit 40 performs the peak suppressing process again.

In this embodiment, the window function-type peak suppressing unit 40 calculates a window function (hereinafter, referred to as a quadratic curve window function) generated by connecting three quadratic function curves (quadratic curves) such that the curves are continuous at change points for the detected peaks, and performs the peak suppressing process using the calculated window function, which is described below.

A distortion compensating unit 50 multiplies the transmission signal by characteristics (distortion compensation coefficient) opposite to the distortion characteristics of an amplifier (AMP) 400 in order to reduce the distortion of the output characteristics of the amplifier (AMP) 400. The amplifier requires high power efficiency all the time, but the linearity and the efficiency of the amplifier are generally contrary to each other. Therefore, in order to improve the power efficiency using an amplifier having low linearity, a pre-distortion-type distortion compensating unit is used to compensate distortion. The pre-distortion-type distortion compensating unit compares a transmission signal before distortion compensation with a demodulated feedback signal to calculate an error therebetween, and calculates and updates a distortion compensation coefficient using the error.

The transmission signal whose distortion is compensated is converted into an analog signal by a DAC 300, and the analog signal is amplified by the amplifier 400. Then, the amplified signal is transmitted from an antenna.

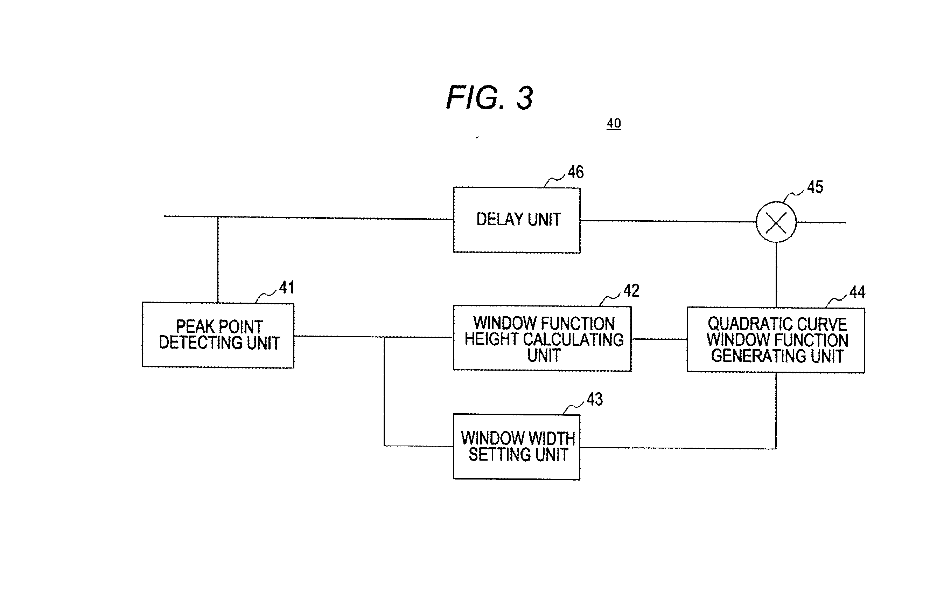

FIG. 3 illustrates an example of the structure of the window-function-type peak suppressing unit 40. When a peak point detecting unit 41 of the window-function-type peak suppressing unit 40 detects a peak point from the transmission signal, a window function height calculating unit 42 calculates a window function height H corresponding to a suppression amount required to reduce the peak level of the peak point to a suppression level. The window function height H is calculated by multiplying the suppression amount by a specified correction coefficient.

A window width L is set in a window width setting unit 43 in advance, and the window width setting unit 43 outputs the set window width L. In this embodiment, without selecting and setting one of the window widths of a limited number of window functions, a window function corresponding to the window width is calculated. Therefore, the window width setting unit 43 may set various window widths calculated according to the frequency bandwidth or the sampling rate of IFFT (inverse fast Fourier transform), without any restrictions.

A quadratic curve window function generating unit 44 generates and outputs a quadratic curve window function, and the structure and operation thereof are described below. A multiplier 45 multiplies the transmission signal that is delayed by a predetermined amount of time by a delay unit 46 by the window function generated by the quadratic curve window function generating unit 44. In this way, the peak of the transmission signal is suppressed.

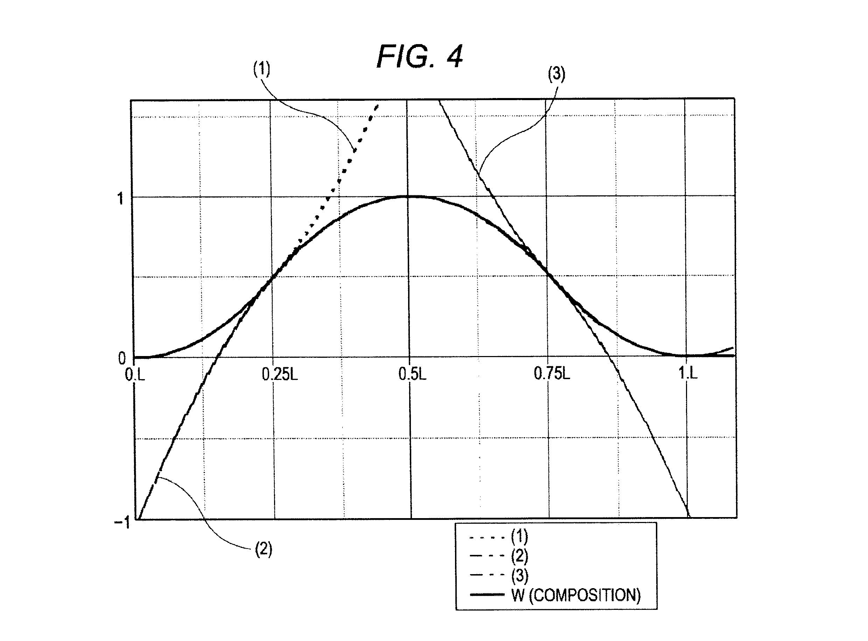

FIG. 4 illustrates the window function generated by the quadratic curve window function generating unit 44. In this embodiment, the window function (quadratic curve window function) is generated by connecting three quadratic curves so as to be continuous with each other. For example, the window function is defined by the following three quadratic curves (1), (2), and (3).

$$W(x) = \frac{8}{L^2} x^2 \qquad \text{if } 0 \le x < L/4 \quad \cdots (1),$$

$$W(x) = -\frac{8}{L^2}(x-\frac{L}{2})^2 + 1 \quad \text{if } L/4 \le x < 3L/4 \quad \cdots(2),$$

and

$$W(x) = \frac{8}{L^2}(x-L)^2 \quad \text{if } 3L/4 \le x < L \quad \cdots(3)$$

(where L indicates a window width).

As illustrated in FIG. 4, the quadratic curve window function generating unit 44 may generate a window function using the quadratic curves by connecting three quadratic curves so as to be continuous at change points.

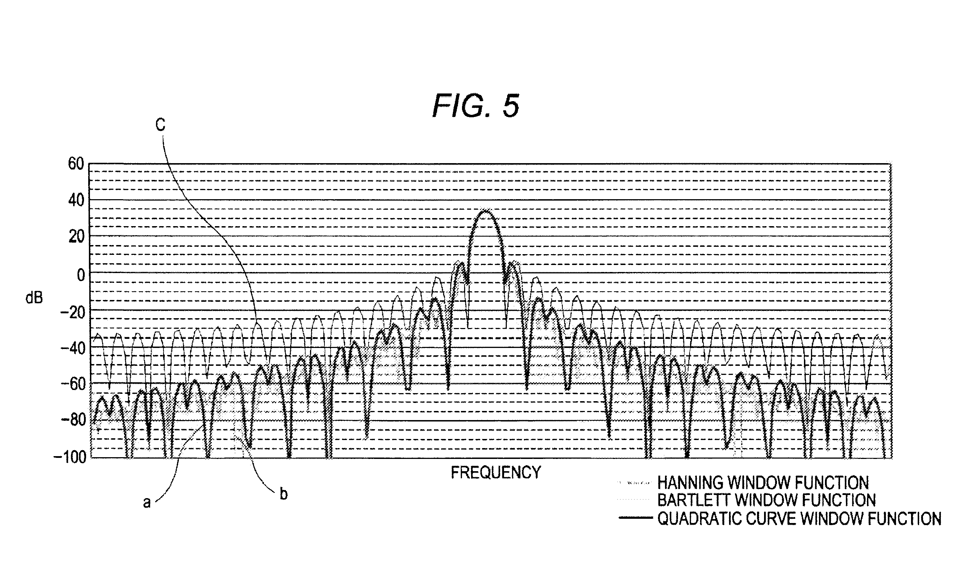

FIG. 5 illustrates the frequency characteristics of a quadratic curve window function. In order to evaluate the frequency characteristics of the quadratic curve window function (waveform a represented by a bold solid line), the frequency characteristics of a Hanning window function (waveform b represented by a dotted line) and the frequency characteristics of a Bartlett window function (waveform c represented by a thin solid line) are also illustrated in FIG. 5.

The frequency characteristics of the quadratic curve window function are sufficiently practical, as compared to the frequency characteristics of the Hanning window function that is generally used for a peak suppressing process. In addition, the Bartlett window function is calculated by a relatively easy operation. However, the Bartlett window function has a high sidelobe and is not used for the peak suppressing process. This embodiment proposes a method of calculating a quadratic curve window function having good frequency characteristics suitable for the peak suppressing process using a simple arithmetic circuit.

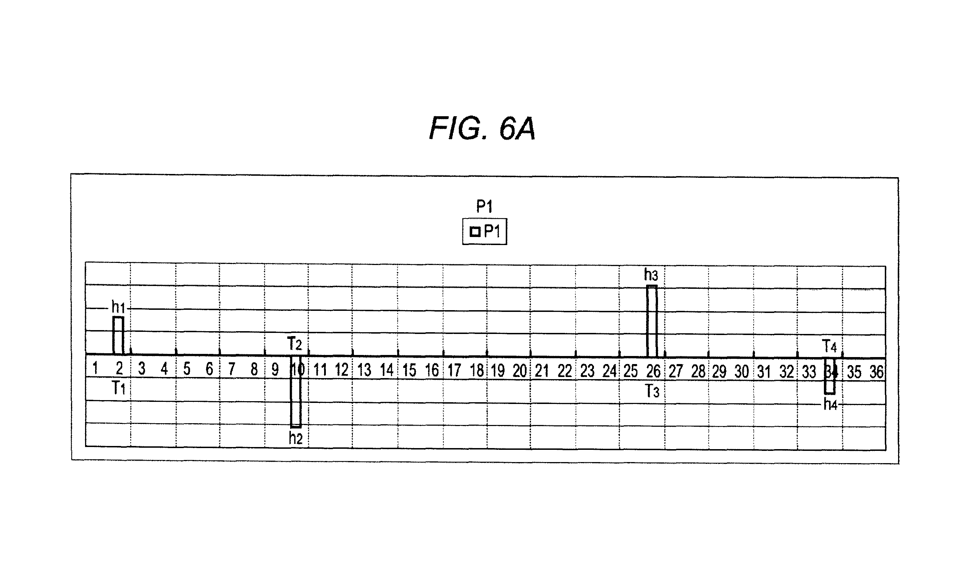

FIGS. 6A to 6D illustrate a method of generating a quadratic curve window function. The quadratic curve window function is generated by accumulating a delta function (impulse function) S satisfying the following conditions three times (triple integral). When the delta function S is $\delta(t-T)$ at a time t, a time T (T1, T2, T3, and T4) corresponds to the change point of the quadratic curve, and a pulse having a height h is generated at the times T1, T2, T3, and T4.

$$S_1 = h_1\delta(t-T_1) \quad (T_1 \le t < T_2),$$

$$S_2 = h_2\delta(t-T_2) \quad (T_2 \le t < T_3),$$

$$S_3 = h_3\delta(t-T_3) \quad (T_3 \le t < T_4),$$

and

$$S_4 = h_4\delta(t-T_4) \quad (t = T_4)$$

$$\left(\text{where} \quad \delta(t) = \begin{cases} 1 & (t=0) \\ 0 & (t \ne 0) \end{cases}\right).$$

When the width of the window function is L and the window function height of the peak level of a peak point with respect to the suppression level is H, time parameters T (T1, T2, T3, and T4) and pulse height parameters h (h1, h2, h3, and h4) are expressed by the following expression:

$$T_2 - T_1 = \frac{W}{4},$$

$$T_3 - T_2 = \frac{W}{2},$$

$$T_4 - T_3 = \frac{W}{4},$$

$$h_1 = \frac{16\,H}{W^2},$$

$$h_2 = -\frac{32\,H}{W^2},$$

$$h_3 = \frac{32\,H}{W^2},$$

and

$$h_4 = -\frac{16\,H}{W^2}.$$

FIG. 6A is a timing chart illustrating the delta function S (S1, S2, S3, and S4) satisfying the above-mentioned conditions. At the times T1, T2, T3, and T4, pulses having heights h1, h2, h3, and h4 (hereinafter, referred to as pulses h1, h2, h3, and h4) are output. In this case, according to the above-mentioned expression, the pulse h2 is minus two times the pulse h1, the pulse h3 is two times the pulse h1, and the pulse h4 is equal to the negative of the pulse h1.

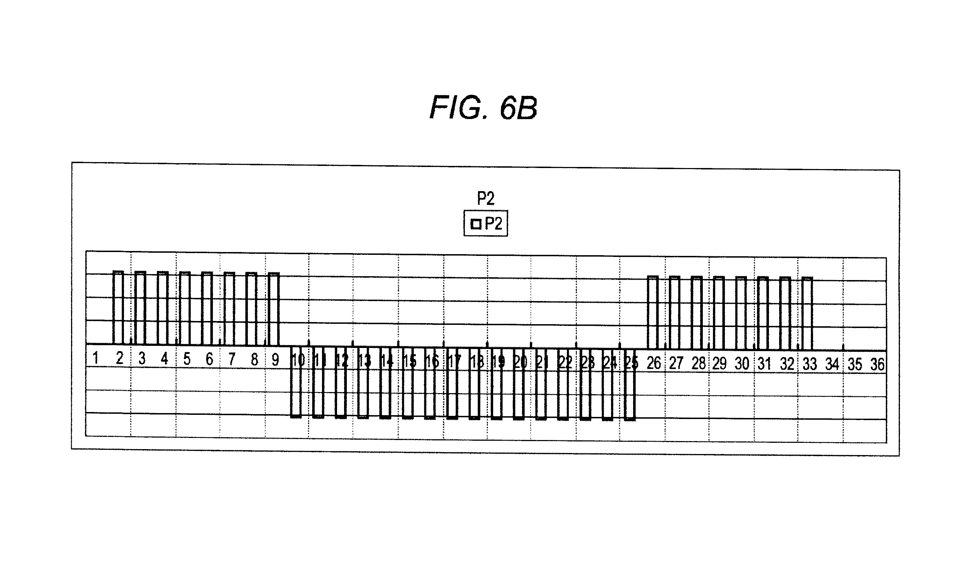

FIG. 6B illustrates the operation results when the delta function S illustrated in FIG. 6A is accumulated for each clock. The pulse h1 is output at the time T1, and the delta function S1 is zero for a period from the time T1 to the time T2. Therefore, the operation result is h1 when $T1 \leq t < T2$. Then, the pulse $h2 = -2 \times h1$ is output at the time T2, and the delta function S2 is zero for a period from the time T2 to the time T3. Therefore, the operation result is h1 + h2 = -h1 when $T2 \leq t < T3$. Then, the pulse $h3 = 2 \times h1$ is output at the time T3, and the delta function S3 is zero for a period from the time T3 to the time T4. Therefore, the operation result is -h1 + 2h1 = h1 when $T3 \leq t < T4$. Then, the pulse h4 = -h1 is output at the time T4, and the operation result at the time T4 is h1 - h1 = 0.

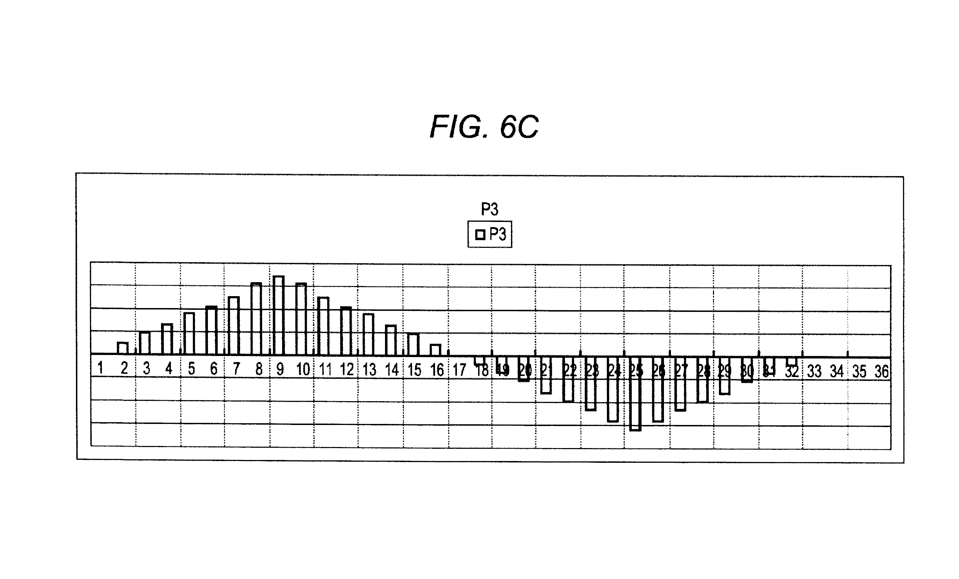

FIG. 6C illustrates the operation results obtained by accumulating the operation results illustrated in FIG. 6B for each clock. In FIG. 6C, when $T1 \leq t < T2$, the pulse height h1 is added to each clock. When $T2 \leq t < T3$, the pulse height h1 is subtracted from each clock (-h1 is added to each clock). When $T3 \leq t < T4$, the pulse height h1 is added to each clock. In this way, the operation results illustrated in FIG. 6C are obtained.

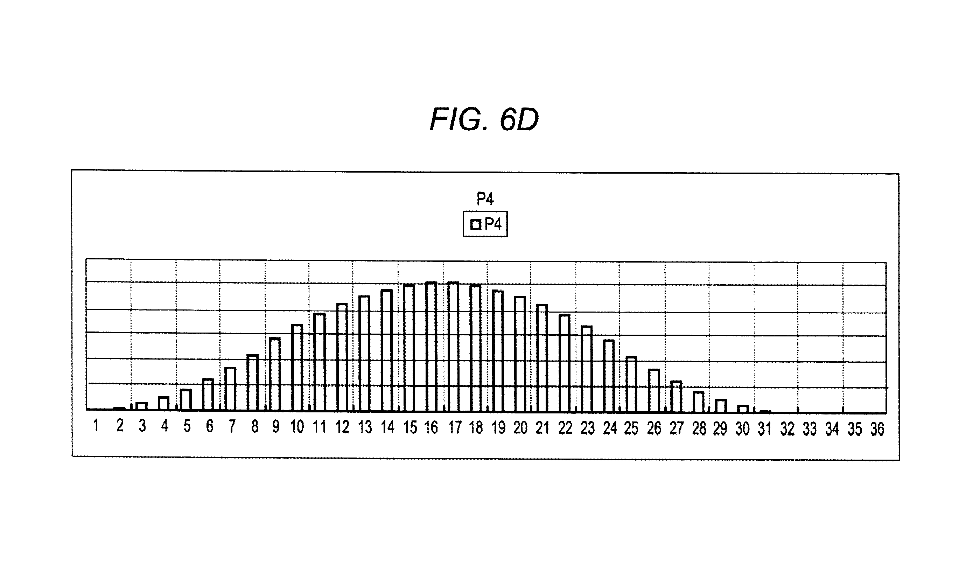

FIG. 6D illustrates the operation results obtained by accumulating the operation results illustrated in FIG. 6C for each clock. As illustrated in FIG. 6D, four delta functions S (S1, S2, S3, and S4) are accumulated three times to obtain a quadratic curve window function.

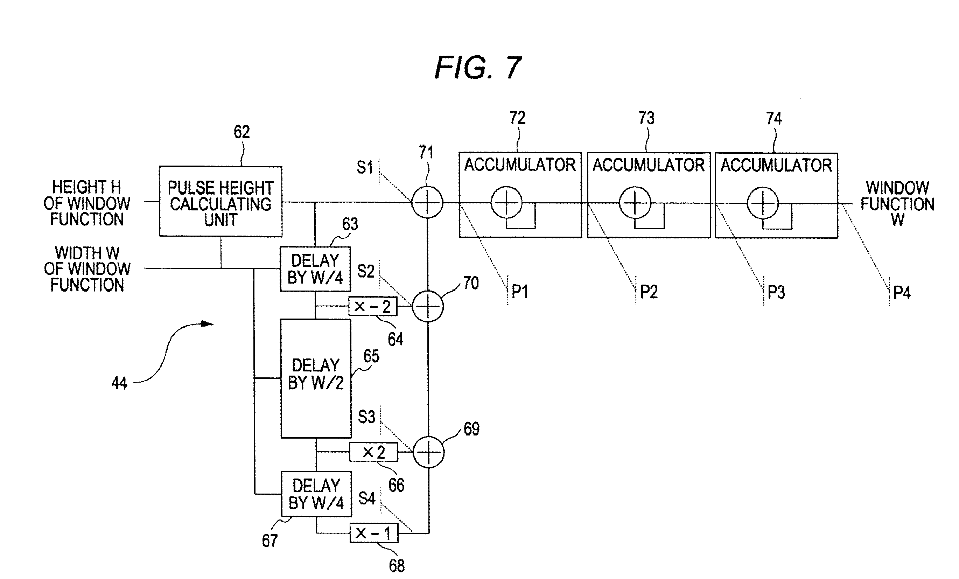

FIG. 7 illustrates an example of the structure of the quadratic curve window function generating unit 44 that generates the quadratic curve window functions illustrated in FIGS. 6A to 6D. First, the quadratic curve window function generating unit 44 generates the delta functions S1, S2, S3, and S4. Specifically, a pulse height calculating unit 62 calculates a base pulse (h1) corresponding to a peak suppression amount on the basis of the width L and the height H of the window function according to the above-mentioned expression, and outputs the pulse h1 at the time T1 (output of the delta function S1).

A delay unit 63 delays the pulse h1 by L/4, and a computing unit 64 multiplies the height of the pulse h1 by -2 to output the pulse h2 at the time T2 (output of the delta function S2).

A delay unit 65 further delays the pulse h1 delayed by the delay unit 63 by L/2, and a computing unit 66 multiplies the height of the pulse h1 by 2 to output the pulse h3 at the time T3 (output of the delta function S3).

A delay unit 67 further delays the pulse h1 delayed by the delay unit 65 by L/4, and a computing unit 68 multiplies the height of the pulse h1 by - 1 to output the pulse h4 at the time T4 (output of the delta function S4). The computing units 64, 66, and 68 may be adders.

An adder 69 adds the output (pulse h3) of the computing unit 66 and the output (pulse h4) of the computing unit 68, and an adder 70 adds the output (pulses h3 and h4) of the adder 69 and the output of the computing unit 64 (pulse h2). An adder 71 adds the (pulses h2, h3, and h4) of the adder 70 and the output (pulse h1) of the pulse height calculating unit 62, and outputs the added result. That is, the adder 71 outputs the pulses h1, h2, h3, and h4 at the times T1, T2, T3, and T4, respectively. FIG. 6A corresponds to an output P1 of the adder 71.

The output P1 of the adder 71 is input to the accumulator 72 and accumulated. An output P2 of the accumulator 72 is input to the accumulator 73 and accumulated. An output P3 of the accumulator 73 is input to the accumulator 74 and accumulated. An output P4 of the accumulator 74 is a quadratic curve window function. That is, the quadratic curve window function is generated by accumulating the output P1 of the adder 71 three times. The output P2 of the accumulator 72 corresponds to FIG. 6B, the output P3 of the accumulator 73 corresponds to FIG. 6C, and the output P4 of the accumulator 74 corresponds to FIG. 6D.

The quadratic curve window function generating unit 44 according to this embodiment illustrated in FIG. 7 performs operations using only the adders without using a multiplier. Therefore, the quadratic curve window function generating unit 44 may have a circuit structure that is smaller than one multiplier module. As a result, the quadratic curve window function generating unit has a simple circuit structure and a very small operation load. In addition, the quadratic curve window function generating unit 44 may directly calculate a window function having a given window width without storing the operation results of a limited number of window functions as a table. Further, in the structure illustrated in FIG. 7, the window width may be set for every four clocks.

When a plurality of peak points are detected within the time of the window width, each peak point is processed by the structure illustrated in FIG. 7, and the output P4 of the accumulator 74 in the last stage is a window function obtained by composing quadratic curve window functions corresponding to the peak points. Therefore, in this embodiment, the quadratic curve window function generating unit 44 may not have a circuit structure corresponding to the number of peak points generated within the time of the window width, and there is no limitation in the number of peak points.

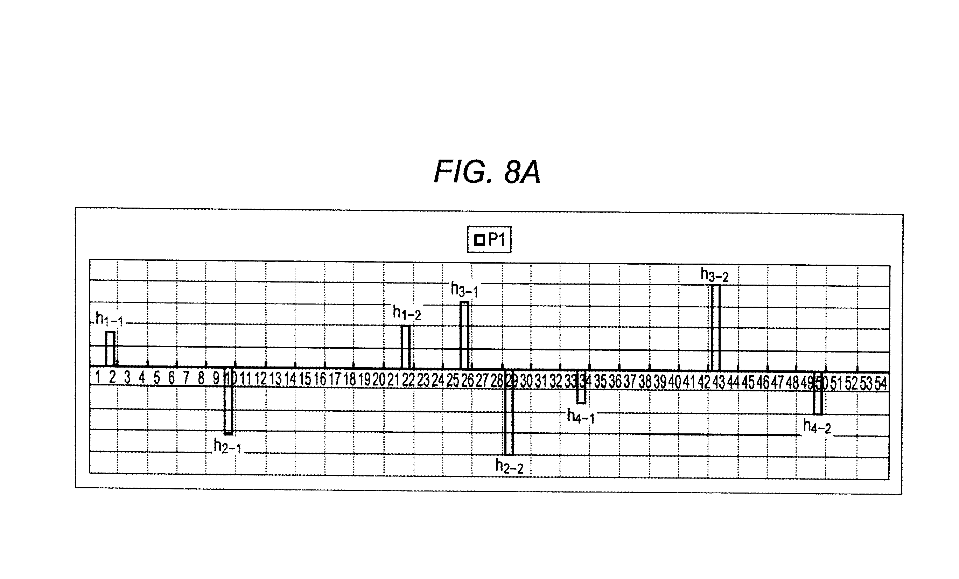

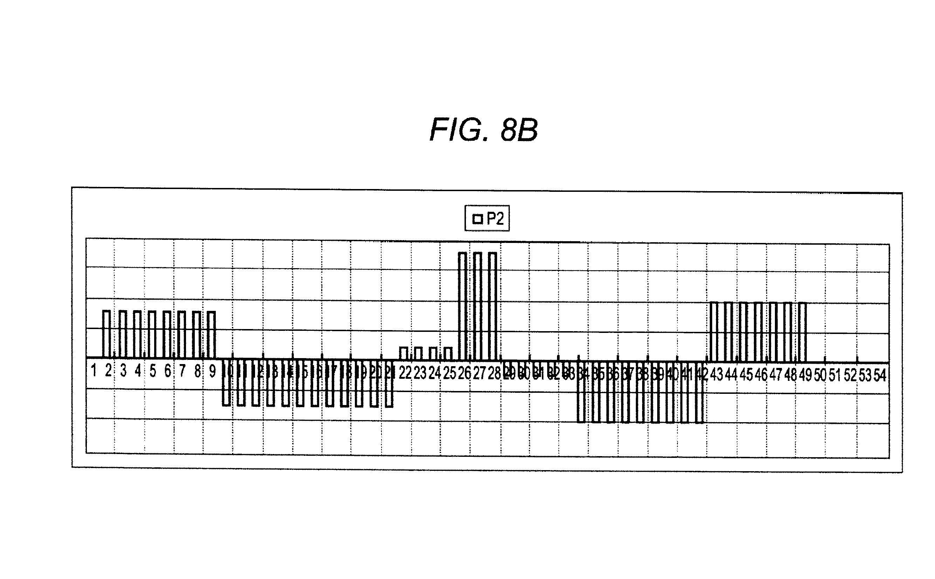

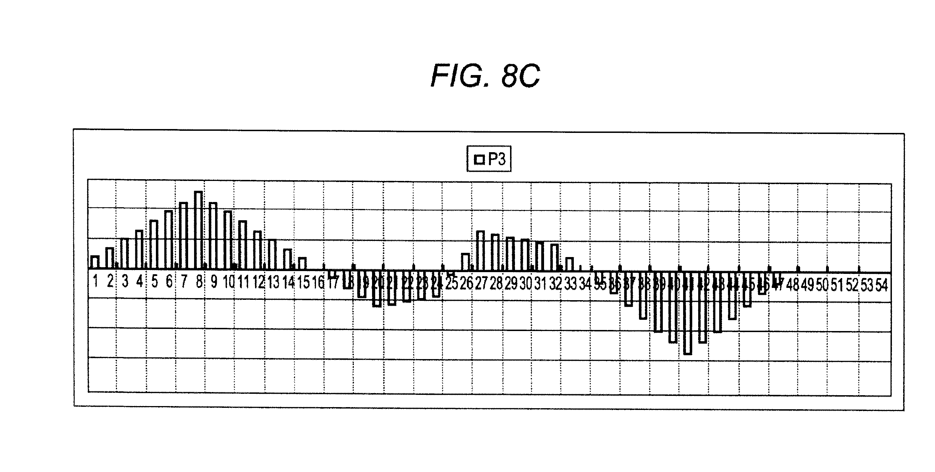

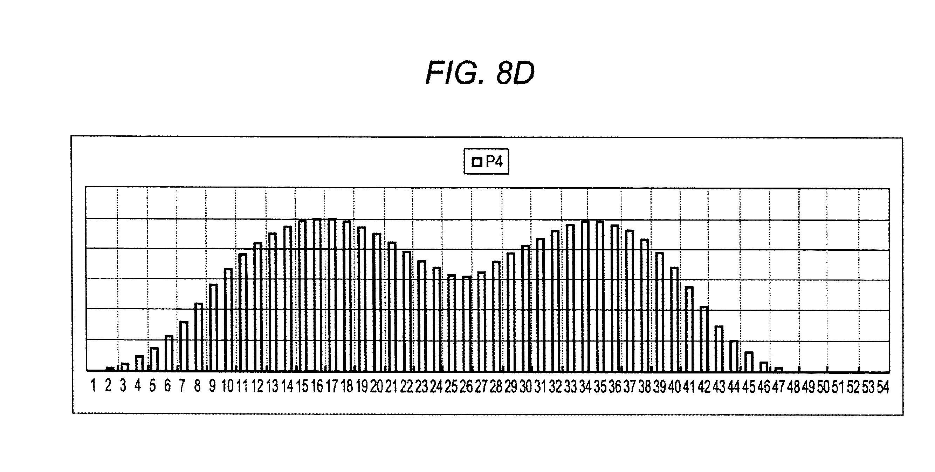

FIGS. 8A to 8D illustrate quadratic curve window functions when two peak points are detected within the time of the window width. FIG. 8A illustrates a delta function generated for each peak. In FIG. 8A, pulses h1-1, h2-1, h3-1, and h4-1 generate a window function that suppresses a first peak, and pulses h1-2, h2-2, h3-2, and h4-2 generate a window function that suppresses a second peak. Similar to the above, these pulses are accumulated three times. FIG. 8B illustrates the operation results obtained by the first accumulating process, FIG. 8C illustrates the operation results obtained by the second accumulating process, and FIG. 8D illustrates the operation results obtained by the third accumulating process. Similar to FIGS. 6A to 6D, the output P1 of the adder 71 corresponds to FIG. 8A, the output P2 of the accumulator 72 corresponds to FIG. 8B, the output P3 of the accumulator 73 corresponds to FIG. 8C, and the output P4 of the accumulator 74 corresponds to FIG. 8D. As illustrated in FIG. 8D, the output P4 of the accumulator 74 is a window function obtained by composing quadratic curve window functions corresponding to the two peaks.

Therefore, in this embodiment, not preparing the window function generating units 44 corresponding to the number of peak points that are expected to occur within the window width, one window function generating unit 44 may correspond to a plurality of peak points. Therefore, in this embodiment, it is possible to significantly reduce the size of a circuit. In addition, it is possible to simplify the structure of the window function generating unit, and the size of a circuit to about one-tenth the size of a window function generating circuit according to the related art.

According to the above-mentioned apparatus and method, it is possible to calculate a window function using quadratic functions. In this way, it is possible to simplify the structure of a window function generating circuit. Therefore, when various window widths are set as in a WiMAX system, it is possible to generate a window function corresponding to a set window width, without restrictions in the window width, and flexibly cope with a change in the window width.

The window function generating unit according to this embodiment may be applied to various apparatuses using a window function as well as a peak suppressing process of a wireless transmitting apparatus.

In any of the above aspects, the various features may be implemented in hardware, or as software modules running on one or processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A peak suppressing apparatus for suppressing peak components of a signal using a window function, comprising:

   a detecting unit that detects the peak components which are more than a given threshold value;
   a window width setting unit that sets a window width of the window function; and
   a window function generating unit that generates the window function using quadratic functions by calculation based on peak levels of the peak components and the window width.

2. The peak suppressing apparatus according to claim 1,
   wherein the window function generating unit generates a delta function that has given values at a plurality of given timings within the window width based on the window width set by the window width setting unit, and accumulates the delta function three times to generate the window function using the quadratic functions.

3. A wireless transmitting apparatus comprising:

   a peak suppressing unit that suppresses peak components of a transmission signal using a window function; and
   an amplifier that amplifies the transmission signal whose peak components are suppressed by the peak suppressing unit,

   wherein the peak suppressing unit includes:

   a detecting unit that detects the peak components which are more than a given threshold value;
   a window width setting unit that sets a window width of the window function; and
   a window function generating unit that generates the window function using quadratic functions by calculation based on peak levels of the peak components and the window width.

4. The wireless transmitting apparatus according to claim 3,
   wherein the window function generating unit generates a delta function that has given values at a plurality of given timings within the window width based on the window width set by the window width setting unit, and accumulates the delta function three times to generate the window function using the quadratic functions.

5. A window function generating apparatus comprising:

   a window width setting unit that sets a window width of a window function;
   a window function generating unit that generates a delta function that has given values at a plurality of given timings within the window width based on the set window width of the window function; and
   accumulators that accumulate the delta function three times to generate the window function using quadratic functions.

6. A window function generating method comprising:

   setting a window width;
   generating a delta function that has given values at a plurality of given timings within the window width based on the set window width; and
   accumulating the delta function three times to generate the window function using quadratic functions.

FIG. 1  RELATED ART

## FIG. 2

*FIG. 3*

40

| PEAK POINT DETECTING UNIT | 41 |

| DELAY UNIT | 46 |

| WINDOW FUNCTION HEIGHT CALCULATING UNIT | 42 |

| WINDOW WIDTH SETTING UNIT | 43 |

| QUADRATIC CURVE WINDOW FUNCTION GENERATING UNIT | 44 |

45

FIG. 4

## FIG. 5

c

60
40
20
0
-20
-40
-60
-80
-100

dB

FREQUENCY

a

b

········· HANNING WINDOW FUNCTION
············ BARTLETT WINDOW FUNCTION
——— QUADRATIC CURVE WINDOW FUNCTION

## FIG. 6A

EP 2 101 462 A2

## FIG. 6B

FIG. 6C

FIG. 6D

## FIG. 7

HEIGHT H
OF WINDOW
FUNCTION

WIDTH W
OF WINDOW
FUNCTION

PULSE HEIGHT
CALCULATING
UNIT — 62

44

63 — DELAY BY W/4

65 — DELAY BY W/2

67 — DELAY BY W/4

S1

S2

S3

S4

×−2 — 64

×2 — 66

×−1 — 68

71

70

69

ACCUMULATOR — 72

ACCUMULATOR — 73

ACCUMULATOR — 74

WINDOW
FUNCTION
W

P1

P2

P3

P4

EP 2 101 462 A2

## FIG. 8A

## FIG. 8B

*FIG. 8C*

*FIG. 8D*

## REFERENCES CITED IN THE DESCRIPTION

### Patent documents cited in the description

- JP 6295855 A
- JP 2005337825 A